# EUROPÄISCHE PATENTSCHRIFT

(11) **EP 3 562 759 B1**
(45) Veröffentlichungstag und Bekanntmachung des Hinweises auf die Patenterteilung: **28.07.2021**
(21) Anmeldenummer: 17822332.7
(22) Anmeldetag: 28.12.2017
(51) Int. Cl.: B65G 1/04

(54) **FAHRBARES LAGERBEDIENGERÄT UND LAGERBEDIENSYSTEM**
MOBILE WAREHOUSING APPARATUS AND WAREHOUSING SYSTEM
APPAREIL DE DESSERTE MOBILE ET SYSTÈME DE DESSERTE

(30) Priorität: 28.12.2016 DE 102016125788
(43) Veröffentlichungstag der Anmeldung: 06.11.2019
(73) Patentinhaber: Extor GmbH, 30559 Hannover (DE)
(72) Erfinder: VON DER LIPPE, Jörn, 30559 Hannover (DE)
(74) Vertreter: Glawe, Delfs, Moll
(86) Internationale Anmeldenummer: PCT/EP2017/084689
(87) Internationale Veröffentlichungsnummer: WO 2018/122290

(56) Entgegenhaltungen:
- EP-A1- 1 231 163
- EP-A1- 2 886 020
- EP-A1- 2 982 624
- DE-A1-102006 009 299

## Beschreibung

Die Erfindung betrifft ein fahrbares Lagerbediengerät zum Einlagern und Auslagern von Ware in einem Hochlager, wobei das Lagerbediengerät eine oder mehrere elektrisch betriebene Komponenten aufweist, die über eine Stromversorgungseinrichtung des Lagerbediengeräts mit elektrischer Energie versorgt sind. Die Erfindung betrifft außerdem ein Lagerbediensystem mit wenigstens einem derartigen Lagerbediengerät.

Ein solches Lagerbediengerät und ein Lagerbediensystem sind aus der EP 2 982 624 A1 bekannt. Das Lagerbediensystem dient zur Durchführung von Bedienungsschritten des Lagersystems, d.h. zum Einlagern und Auslagern von Ware in dem Lagersystem. Hierfür weist das Lagerbediensystem eines oder mehrere Lagerbediengeräte auf, die in einem Fahrbereich hin- und herfahren können. Das Lagersystem ist dabei als Hochlager ausgebildet, und zwar in diesem Fall in einer Ausführungsform, bei der einzelne Behälter übereinander gestapelt werden und auf diese Weise mehrere nebeneinander angeordnete Behälterstapel bilden. Bei solchen Lagersystemen werden die aus den übereinander gestapelten Behältern gebildeten Behälterstapel durch Haltevorrichtungen so in einem Abstand vom Boden gehalten, dass sich unterhalb der Behälterstapel das Lagerbediengerät bewegen kann und einzelne Behälter in den Behälterstapel einlagern oder aus dem Behälterstapel entnehmen kann und sich mit einem einzelnen Behälter darunter bewegen kann.

Solche Lagerbediengeräte werden häufig elektrisch betrieben. Für die Versorgung solcher Lagerbediengeräte mit elektrischer Energie ist es bekannt, entweder die Energie von einem externen Energieversorgungsnetz, z.B. einem Drehstromnetz oder einem 220 Volt-Netz, zuzuführen oder das Lagerbediengerät mit einer aufladbaren elektrischen Energiespeichereinrichtung, d.h. einem Akkumulator, auszustatten. Weist das Lagerbediengerät eine solche mitgeführte Energiequelle in Form eines Akkumulators auf, so ist die Betriebszeit relativ begrenzt, und das Lagerbediengerät kann während relativ langer Aufladezeiten nicht genutzt werden. Zudem verringert ein entsprechend groß dimensionierter Akkumulator aufgrund seines Eigengewichts die Nutzlast des Lagerbediengeräts. Diese Probleme treten bei einer permanenten externen elektrischen Energieversorgung nicht auf. Allerdings wird hierdurch die Flexibilität des Lagerbediengeräts eingeschränkt, weil permanent ein Kontakt zu dieser externen elektrischen Energieversorgungseinrichtung vorhanden sein muss. Rein extern gespeiste Lagerbediengeräte sind unflexibel und ortsgebunden.

Das Dokument EP 2 886 020 A1 betrifft ein Logistiksystem für einen Modeladen mit automatisierten Transporteinheiten, welche in einem Warenlager verwendet werden können. Die Transporteinheiten bewegen sich über elektrisch angetriebene Rollen auf Schienen eines Schienennetzes und können über Batterien und/oder über ein dafür ausgestaltetes Führungssystem mit Energie versorgt werden.

Der Erfindung liegt die Aufgabe zugrunde, ein solches Lagerbediengerät im Hinblick auf seine elektrische Energieversorgung zu optimieren.

Gelöst wird diese Aufgabe durch ein Lagerbediengerät gemäß Anspruch 1. Auf diese Weise kann eine hybride Stromversorgungseinrichtung realisiert werden. Ein derartiges Lagerbediengerät weist eine hohe Flexibilität im Betrieb auf. Zudem werden Ausfallzeiten durch Ladezyklen und ähnliches minimiert. Durch die Möglichkeit der zusätzlichen Energieversorgung, neben der Versorgung aus der aufladbaren elektrischen Energiespeichereinrichtung, aus der externen elektrischen Energieversorgungseinrichtung kann kurzfristig auch eine große elektrische Leistung bereitgestellt werden, die für die Transportaufgaben des Lagerbediengeräts z.B. beim Einlagern eines Behälters in einem Behälterstapel erforderlich ist. Die aufladbare elektrische Energiespeichereinrichtung kann, sofern das Lagerbediengerät mit der externen elektrischen Energieversorgungseinrichtung verbunden ist, im laufenden Betrieb des Lagerbediengeräts wieder aufgeladen werden. Dies ermöglicht es, die erforderliche Kapazität und damit die Baugröße und das Gewicht der aufladbaren elektrischen Energiespeichereinrichtung gering zu halten. Auf diese Weise geht hierdurch nur wenig Nutzlast verloren. Hierdurch kann das gesamte Lagerbediengerät relativ leicht und kompakt bei zugleich hoher Leistungsfähigkeit ausgebildet sein.

Die Verbindungseinrichtung zur zumindest zeitweisen Verbindung des Lagerbediengeräts mit der externen elektrischen Energieversorgungseinrichtung kann z.B. als Stromabnehmer mit galvanischen Kontakten (Schleifkontakten) ausgebildet sein, oder als induktive Stromabnehmer, durch die auch ohne galvanische Kontaktierung elektrische Energie ähnlich wie bei einem Transformator in das Lagerbediengerät eingespeist werden kann.

Die externe elektrische Energieversorgungseinrichtung kann als Anordnung von Stromversorgungschienen oder anderen Energieabgabestellen ausgebildet sein, die mit einem üblichen Energieversorgungsnetz verbunden sind, z.B. einem Wechselstromnetz oder einem Drehstromnetz. Das Lagerbediengerät kann als autonom selbstfahrendes Lagerbediengerät ausgebildet sein, mit einer eigenen Steuerung für Fahrvorgänge.

Gemäß der Erfindung ist vorgesehen, dass das Lagerbediengerät ein Energieversorgungsmanagement aufweist, das dazu eingerichtet ist, elektrisch betriebene Komponenten des Lagerbediengeräts abhängig von wenigstens einem Betriebszustand des Lagerbediengeräts vollständig oder überwiegend entweder aus der ersten Energiequelle oder aus der zweiten Energiequelle mit elektrischer Energie zu versorgen. Das Energieversorgungsmanagement kann als Hardwareeinheit, als Softwarekomponente oder als Kombination daraus ausgebildet sein. Durch die Versorgung der elektrisch betriebenen Komponenten aus der ersten oder aus der zweiten elektrischen Energiequelle abhängig von einem Betriebszustand kann die je nach Betriebszustand geeignetste Energiequelle ausgewählt werden. Bei einem Lagerbediengerät kann ein Betriebszustand beispielsweise dadurch festgelegt sein, ob eine Ware im Hochlager eingelagert oder ausgelagert werden soll. Insbesondere das Einlagern von Ware in einem Behälterstapel-Lager erfordert eine zumindest kurzzeitige hohe elektrische Leistungsanforderung, so dass es vorteilhaft ist, in einem solchen Betriebszustand das Lagerbediengerät aus der zweiten Energiequelle mit elektrischer Energie zu versorgen. Übergangsweise kann das Lagerbediengerät sowohl aus der ersten Energiequelle als auch aus der zweiten Energiequelle mit elektrischer Energie versorgt werden.

Gemäß der Erfindung ist vorgesehen, dass der wenigstens eine Betriebszustand des Lagerbediengeräts wenigstens eine Fahrtrichtung beim Fahren des Lagerbediengeräts ist oder umfasst. Auf diese Weise kann Besonderheiten der Energiezuführung über die Verbindungseinrichtung Rechnung getragen werden, z.B. wenn die Verbindungseinrichtung entlang von im Fahrbereich des Lagerbediengeräts angeordneten Stromversorgungsschienen geführt werden muss, um die Verbindung des Lagerbediengeräts mit der externen elektrischen Energieversorgungseinrichtung bereitzustellen. In diesem Fall kann z.B. automatisch die Versorgung aus der zweiten Energiequelle erfolgen, wenn die Verbindungseinrichtung aufgrund der Fahrrichtung des Lagerbediengeräts eine Verbindung zur externen elektrischen Energieversorgung herstellen kann, und automatisch auf eine Versorgung aus der ersten Energiequelle geschaltet werden, wenn dies aufgrund der Fahrtrichtung nicht möglich ist.

Gemäß einer vorteilhaften Weiterbildung der Erfindung ist vorgesehen, dass das Energieversorgungsmanagement dazu eingerichtet ist, die elektrischen Komponenten zu mehr als 50 % der Betriebszeit des Lagerbediengeräts aus der zweiten Energiequelle mit elektrischer Energie zu versorgen. In einer vorteilhaften Weiterbildung kann das Energieversorgungsmanagement dazu eingerichtet sein, die elektrischen Komponenten zu mehr als 70 % der Betriebszeit des Lagerbediengeräts aus der zweiten Energiequelle mit elektrischer Energie zu versorgen. Auf diese Weise wird die aufladbare elektrische Energiespeichereinrichtung geschont. Zudem steht relativ viel Zeit für das Aufladen der aufladbaren elektrischen Energiespeichereinrichtung zur Verfügung. Insgesamt kann die aufladbare elektrische Energiespeichereinrichtung hierdurch klein dimensioniert werden.

Gemäß einer vorteilhaften Weiterbildung, nicht Teil der Erfindung, ist vorgesehen, dass das Lagerbediengerät mehrere Räder aufweist, auf denen das Lagerbediengerät verfahrbar ist, wobei die Räder oder zumindest eine Untermenge der Räder von einer Längsfahrrichtung des Lagerbediengeräts in eine Querfahrrichtung des Lagerbediengeräts und umgekehrt verstellbar sind, wobei die Querfahrrichtung im Wesentlichen senkrecht zur Längsfahrrichtung verläuft, sodass das Lagerbediengerät wahlweise in Längsfahrrichtung oder in Querfahrrichtung verfahrbar ist. Auf diese Weise kann das Lagerbediengerät schnell Richtungswechsel zwischen der Längsfahrrichtung und der Querfahrrichtung durchführen, ohne dass für den Wechsel der Fahrtrichtung große Massen bewegt werden müssen. So muss nicht vom Lagerbediengerät eine Kurve gefahren werden. Stattdessen können die relativ leichten Räder des Lagerbediengeräts hinsichtlich ihrer Fahrrichtung verstellt werden, sodass das Lagerbediengerät schnell in einer der zueinander im Wesentlichen orthogonalen Fahrrichtungen bewegt werden kann.

Ein weiterer Ausführung, nicht Teil der Erfindung, besteht darin, dass die Räder nicht in beliebige Stellungen verstellbar sein müssen, z.B. in eine Zwischenstellung zwischen der Querfahrrichtung und der Längsfahrrichtung. Stattdessen ist es ausreichend, wenn die Räder nur in die genannten zwei diskreten Positionen für die Querfahrrichtung und die Längsfahrrichtung einstellbar sind. Dies erlaubt ein präzises Navigieren des Lagerbediengeräts in den gewünschten zueinander orthogonalen Fahrrichtungen, die der matrixartigen Anordnung der Behälterstapel in dem Hochlager entspricht.

Es ist zu erwähnen, dass das Lagerbediengerät auch noch weitere Räder aufweisen kann, die nicht von einer Längsfahrrichtung des Lagerbediengeräts in eine Querfahrrichtung des Lagerbediengeräts und umgekehrt verstellbar sind, z.B. fest angeordnete Räder. Es ist vorteilhaft, wenn zumindest 3 oder 4 Räder von einer Längsfahrrichtung des Lagerbediengeräts in eine Querfahrrichtung des Lagerbediengeräts und umgekehrt verstellbar sind.

Das Hochlager kann als ein Hochlager der eingangs erwähnten Art, wie es aus der EP 2 982 624 A1 bekannt ist, ausgebildet sein, d.h. als matrixförmige Anordnung von übereinander gestapelten Behältern. Jeder Behälterstapel oder Aufnahmeschacht für einen Behälterstapel bildet dann eine Speicherzelle des Hochlagers. Die Größen der Speicherzellen im Hochlager können einheitlich über das ganze Lager ausgebildet sein. Auch dies vereinfacht die Positionierung des Lagerbediengeräts.

Das Hochlager kann auch als andere Art von Hochlager ausgebildet sein, z.B. als Hochregallager. In diesem Fall kann das Lagerbediengerät auch als Regalbediengerät ausgebildet sein.

Gemäß einer vorteilhaften Weiterbildung der Erfindung ist vorgesehen, dass das Lagerbediengerät als schienengebundenes Lagerbediengerät ausgebildet ist, das zum Fahren auf einem Schienensystem eingerichtet ist, welches im Wesentlichen parallele Schienen in einer ersten Hauptrichtung und im Wesentlichen parallele Schienen in einer zweiten Hauptrichtung aufweist, wobei die zweite Hauptrichtung im Wesentlichen senkrecht zur ersten Hauptrichtung verläuft, und das Schienensystem eine Vielzahl von Kreuzungen zwischen den Schienen der ersten Hauptrichtung und den Schienen der zweiten Hauptrichtung aufweist. Dies erlaubt ein präzises und energiesparendes Manövrieren des Lagerbediengeräts. Durch ein solches Schienensystem wird die Positionierung des Lagerbediengeräts in Bezug auf die Speicherzellen noch präziser und effizienter gestaltet. Auf diese Weise können die Lagerbediengeräte mit relativ hoher Geschwindigkeit verfahren werden.

Gemäß einer vorteilhaften Weiterbildung, nicht Teil der Erfindung, ist vorgesehen, dass das Lagerbediengerät dazu eingerichtet ist, die Räder in Längsfahrrichtung zu stellen, wenn das Lagerbediengerät in der ersten Hauptrichtung verfahren werden soll, und die Räder in Querfahrrichtung zu stellen, wenn das Lagerbediengerät in der zweiten Hauptrichtung verfahren werden soll. Somit werden Kurvenfahrten des Lagerbediengeräts für einen Richtungswechsel vermieden. Richtungswechsel sind daher auf dem Schienensystem sehr schnell und ohne wesentliche Positionsveränderungen des Lagerbediengeräts möglich.

Gemäß einer vorteilhaften Weiterbildung der Erfindung ist vorgesehen, dass das Lagerbediengerät beim Fahren auf den Schienen der ersten Hauptrichtung nicht über seine Verbindungseinrichtung mit der externen elektrischen Energieversorgungseinrichtung gekoppelt ist und beim Fahren auf den Schienen der zweiten Hauptrichtung mit der externen elektrischen Energieversorgungseinrichtung gekoppelt ist. Dies erlaubt eine übersichtliche Verlegung von Stromversorgungsschienen im Fahrbereich des Lagerbediengeräts. Insbesondere können Kreuzungen von Stromversorgungsschienen vermieden werden. Das Lagerbediengerät kann insbesondere im Stillstand auch über seine Verbindungseinrichtung mit der externen elektrischen Energieversorgungseinrichtung gekoppelt sein. Das Koppeln des Lagerbediengeräts über die Verbindungseinrichtung an die externe elektrische Energieversorgungseinrichtung kann z.B. abhängig von der Verstellposition der Räder des Lagerbediengeräts erfolgen (Längsfahrrichtung/Querfahrrichtung) .

Gemäß einer vorteilhaften Weiterbildung der Erfindung ist vorgesehen, dass die Verbindungseinrichtung des Lagerbediengeräts ausfahrbare Stromabnehmer aufweist, die mit im Fahrbereich des Lagerbediengeräts verlegten Stromversorgungschienen koppelbar sind. Auf diese Weise können die Stromabnehmer bei Fahrtrichtungen des Lagerbediengeräts, bei denen keine Verbindung zu den Stromversorgungsschienen vorhanden ist, eingefahren werden und sind hierdurch vor Beschädigung geschützt. Für das Ein- und Ausfahren der Stromabnehmer kann das Lagerbediengerät einen gesonderten Aktuator aufweisen, z.B. einen elektrischen Linearaktuator.

Gemäß einer vorteilhaften Weiterbildung der Erfindung ist vorgesehen, dass das Lagerbediengerät eine vertikal bewegliche Hubplattform zum Einlagern und Auslagern von Ware aufweist, wobei die Hubplattform über einen Elektroantrieb angetrieben ist, und wobei der Elektroantrieb der Hubplattform zumindest bei einer Anhebebewegung ausschließlich oder überwiegend aus der zweiten Energiequelle mit elektrischer Energie versorgt ist. Dies ist insbesondere vorteilhaft bei der Verwendung des Lagerbediengeräts in Hochlagern, die das Anheben schwerer Lasten durch die Hubplattform erfordern, z.B. bei einem Behälterstapel.

Gemäß einer vorteilhaften Weiterbildung der Erfindung ist vorgesehen, dass das Lagerbediengerät bei einer Absenkbewegung der Hubplattform zur Energierückgewinnung aus dem Elektroantrieb der Hubplattform eingerichtet ist. Durch eine solche Rekuperation der vom Hubmotor freigesetzten Energie kann die Energieeffizienz des Lagerbediengeräts weiter gesteigert werden. Die zurückgewonnene Energie kann z.B. zum Aufladen des Akkumulators und/oder zum Betreiben einer anderen Last genutzt werden.

Gemäß einer vorteilhaften Weiterbildung der Erfindung ist vorgesehen, dass die Hubplattform zumindest bei einer Anhebebewegung nur bei Vorhandensein einer Kopplung der Verbindungseinrichtung des Lagerbediengeräts zur externen elektrischen Energieversorgungseinrichtung in Betrieb ist. Auf diese Weise kann die aufladbare elektrische Energiespeichereinrichtung geschont werden. Insbesondere ist es möglich, eine aufladbare elektrische Energiespeichereinrichtung mit begrenzter Leistungsverfügbarkeit einzusetzen, da große Belastungen durch den Hubantrieb ausgeschlossen werden können.

Die eingangs genannte Aufgabe wird außerdem gelöst durch ein Lagerbediensystem, aufweisend wenigstens ein Lagerbediengerät der zuvor erläuterten Art und ein Schienensystem, auf dem das wenigstens eine Lagerbediengerät verfahrbar ist. Auch hierdurch können die zuvor erläuterten Vorteile realisiert werden. Das Lagerbediensystem kann auch mehrere Lagerbediengeräte aufweisen, die darauf gleichzeitig betrieben werden.

Gemäß einer vorteilhaften Weiterbildung der Erfindung ist vorgesehen, dass das Schienensystem im Wesentlichen parallele Schienen in einer ersten Hauptrichtung und im Wesentlichen parallele Schienen in einer zweiten Hauptrichtung aufweist, wobei die zweite Hauptrichtung im Wesentlichen senkrecht zur ersten Hauptrichtung verläuft, und das Schienensystem eine Vielzahl von Kreuzungen zwischen den Schienen der ersten Hauptrichtung und den Schienen der zweiten Hauptrichtung aufweist. Dies erlaubt ein präzises und energiesparendes Manövrieren des Lagerbediengeräts.

Das Schienensystem muss dabei hinsichtlich der Anzahl der Kreuzungen nicht vollständig matrixartig ausgebildet sein. Auch mit einer geringeren Anzahl von Kreuzungen als n^{∗}m-Kreuzungen (n = Anzahl der Schienen in der ersten Hauptrichtung, m = Anzahl der Schienen in der zweiten Hauptrichtung) lässt sich das erfindungsgemäße Lagerbediensystem vorteilhaft realisieren. Die höchste Betriebseffizienz, insbesondere wenn mehrere Lagerbediengeräte gleichzeitig betrieben werden, wird aber mit einer vollständigen Matrixanordnung der Schienen mit n^{∗}m-Kreuzungen erreicht. Durch eine solche vollständige Schienenmatrix kann eine besonders geringe Zugriffszeit bei Einlagerungs- und Auslagerungsvorgängen des Hochlagers realisiert werden.

Durch den Betrieb des Lagerbediengeräts auf einem solchen Schienensystem wird zudem die Positionsbestimmung des Lagerbediengeräts vereinfacht, da nur zwei Hauptfahrrichtungen (Längsfahrrichtung, Querfahrrichtung) möglich sind und damit nicht beliebige Positionen angefahren werden können.

Gemäß einer vorteilhaften Weiterbildung der Erfindung ist vorgesehen, dass auf dem Schienensystem mehrere Lagerbediengeräte gleichzeitig betreibbar sind, wobei jedes Lagerbediengerät jede Speicherzelle des Hochlagers anfahren kann. Durch solche mehreren Lagerbediengeräte können die Einlagerungs- und Auslagerungsvorgänge in dem Hochlager beschleunigt werden. Zudem wird eine gewisse Redundanz hinsichtlich der Lagerbediengeräte geschaffen. Das Lagerbediensystem ist auch bei Ausfall von einem oder mehreren Lagerbediengeräten weiter betreibbar, wenn auch mit geringerer Bediengeschwindigkeit.

Gemäß einer vorteilhaften Weiterbildung der Erfindung ist vorgesehen, dass das Schienensystem im Fahrbereich des Lagerbediengeräts verlegte Stromversorgungschienen aufweist, mit denen die Verbindungseinrichtung des Lagerbediengeräts koppelbar ist. Auf diese Weise kann die elektrische Energie der externen elektrischen Energieversorgungseinrichtung dem Lagerbediengerät effizient bereitgestellt werden.

Gemäß einer vorteilhaften Weiterbildung der Erfindung ist vorgesehen, dass die Stromversorgungschienen oder zumindest ein Teil davon parallel zu den Schienen der zweiten Hauptrichtung angeordnet sind. Dies erlaubt eine einfache Verlegung der Stromversorgungsschienen. Es ist nicht erforderlich, gesonderte Stromversorgungsschienen parallel zu den Schienen der ersten Hauptrichtung vorzusehen.

Das erfindungsgemäße Lagerbediengerät ist leicht und flexibel einsetzbar. Es kann rund um die Uhr im Einsatz sein, d.h. ein 24-Stunden-Betrieb der Lagerbediengeräte ist möglich, da das Lagerbediengerät nicht zum Aufladen außer Betrieb genommen werden muss. Hierbei steht für die leistungsintensive Aufgabe des Hubs von Lasten jederzeit ausreichend elektrische Energie zur Verfügung. Bei Ausfall der Energieversorgung aus der externen elektrischen Energieversorgungseinrichtung steht über die mitgeführte aufladbare elektrische Energiespeichereinrichtung noch genug elektrische Energie zur Verfügung, dass das Lagerbediengerät einen sicheren Zustand einnehmen kann.

Die Erfindung wird nachfolgend anhand von Ausführungsbeispielen unter Verwendung von Zeichnungen näher erläutert.

Es zeigen
- Figur 1: - ein Lagersystem in Seitenansicht und
- Figur 2: - eine Detailansicht eines Schachts des Lagersystems in Seitenansicht und
- Figuren 3a, 3b: - ein Haltehakenkonstruktion in verschiedenen Stellungen und
- Figur 4: - ein Teil des Lagersystems in Draufsicht (Vogelperspektive) und
- Figur 5: - eine Dreiseitenansicht eines Behälters und
- Figuren 6, 7: - schematische Darstellungen eines Lagerbediengeräts und
- Figuren 8, 9: - ein Ausschnitt eines Schienensystems und
- Figur 10: - das Lagersystem mit dem Schienensystem in Draufsicht und
- Figuren 11, 12: - weitere Ausführungsformen eines Lagerbediengeräts in schematischer Darstellung und
- Figur 13: - ein Ausschnitt eines Schienensystems und
- Figur 14: - ein Lagerbediengerät auf dem Schienensystem in Frontansicht und
- Figur 15: - eine weitere Ausführungsform des Lagersystems mit dem Schienensystem in Draufsicht.

In den Figuren werden gleiche Bezugszeichen für einander entsprechende Elemente verwendet.

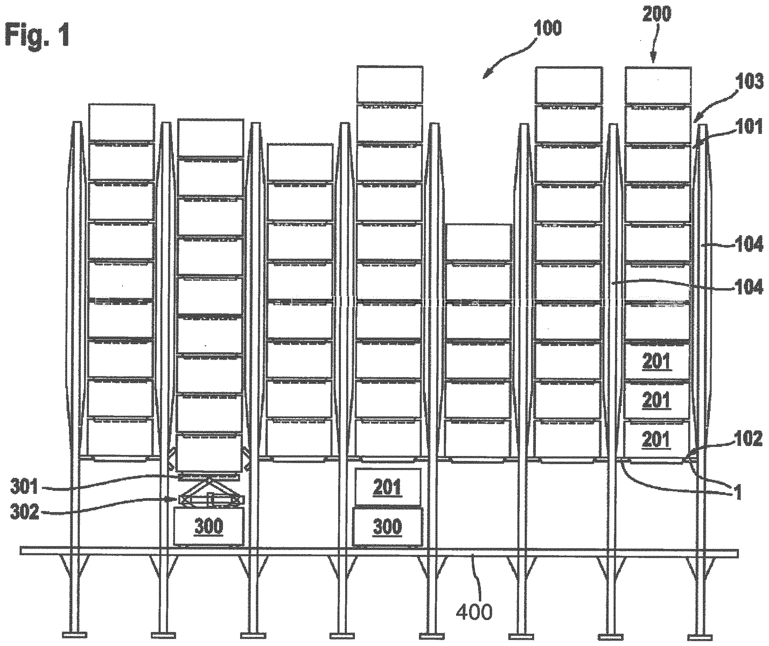

In Figur 1 ist ein erfindungsgemäßes Lagersystem 100 in einer Seitenansicht dargestellt. Das Lagersystem 100 umfasst eine Vielzahl von vertikalen Schächten oder Speicherzellen 101 zur Aufnahme jeweils eines Behälterstapels 200 mit mehreren Behältern 201, wobei neben den in Figur 1 sichtbaren, in Längsrichtung nebeneinander aufgereihten Schächten 101 zusätzliche Schächte in Querrichtung senkrecht zur Blattebene vorgesehen sind. In der Draufsicht bilden die Schächte 101 also eine Rechteckanordnung.

Jeder Schacht 101 weist eine untere Öffnung 102 auf, in deren Bereich Haltevorrichtungen 1 zum Halten des im Schacht 101 befindlichen Behälterstapels 200 vorgesehen sind. Der unterste Behälter 201 des Behälterstapels 200 liegt dabei auf den Haltevorrichtungen 1 auf.

Die untere Öffnung 102 bzw. die dort vorgesehenen Haltevorrichtungen 1 sind in einer Höhe angeordnet, sodass unterhalb der in den Schächten 101 befindlichen Behälterstapel 200 Lagerbediengeräte 300 - auch wenn mit einem Behälter 201 beladen - in Richtung der Blattebene aber auch senkrecht dazu verfahren werden können.

Die Haltevorrichtungen 1 an der unteren Öffnung 102 sind an jeweils gegenüberliegenden Seiten des Schachts 101 angeordnet, wobei auf jeder Seite des Schachts 101 jeweils zwei, senkrecht zur Blattebene beabstandete Haltevorrichtungen 1 vorgesehen sind. Im Bereich der unteren Öffnung 102 eines jeden Schachts 100 sind also vier Haltevorrichtungen 1 vorgesehen. Die Haltevorrichtungen 1 werden in Zusammenhang mit den nachfolgenden Figuren noch ausführlich erläutert.

Jeder Schacht 101 weist weiterhin eine obere Öffnung 103 auf, sodass ein aufgenommener Behälterstapel 200 nach oben auf dem Schacht 101 herausragen kann, wenn dessen Höhe die Höhe des Schachts 101 übersteigt. Jeder Schacht 101 wird durch Rahmenelemente 104 seitlich begrenzt.

Die Lagerbediengeräte 300 sind - wie angesprochen - in Richtung der Blattebene aber auch senkrecht dazu verfahrbar. Darüber hinaus weisen sie eine Behälteraufnahme 301 auf, die über einen Hubmechanismus 302 in vertikaler Richtung verfahren werden kann.

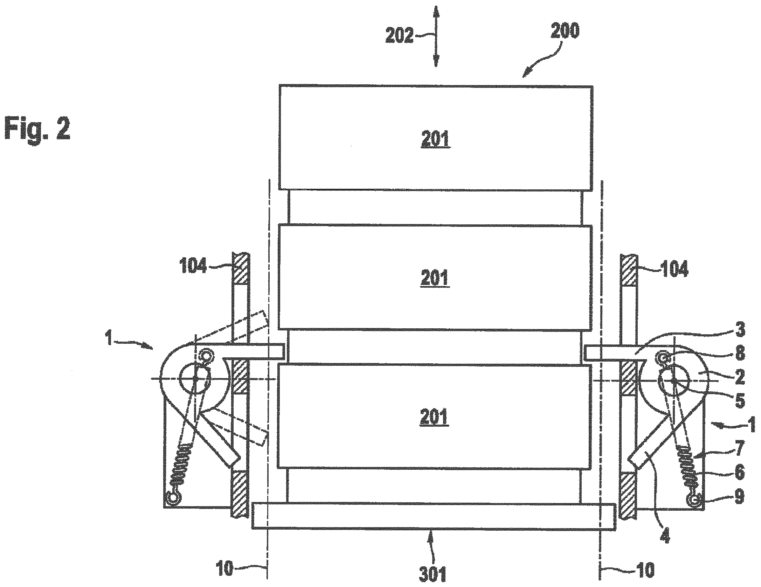

Figur 2 ist ein schematischer Schnitt durch den unteren Bereich eines Schachts 101 des Lagersystems 100 aus Figur 1. Die den Schacht 101 begrenzenden Rahmenelemente 104 sind nur teilweise dargestellt. Gleiches gilt für den Behälterstapel 200 mit dem auf den Haltevorrichtungen 1 aufliegenden untersten Behälter 201.

Die Haltevorrichtungen 1 umfassen jeweils einen Haltehaken 2 mit einem Tragarm 3 und einem Auslösearm 4, wobei der Haltehaken 2 als V-förmiger Doppelhebel mit zwei gleichlangen Schenkeln ausgebildet ist, bei dem der eine Schenkel den Tragarm 3, der andere Schenkel den Auslösearm 4 bildet. Der Haltehaken 2 ist dabei drehbar um eine Drehachse 5 gelagert, die zwischen Tragarm 3 und Auslösearm 4 angeordnet ist.

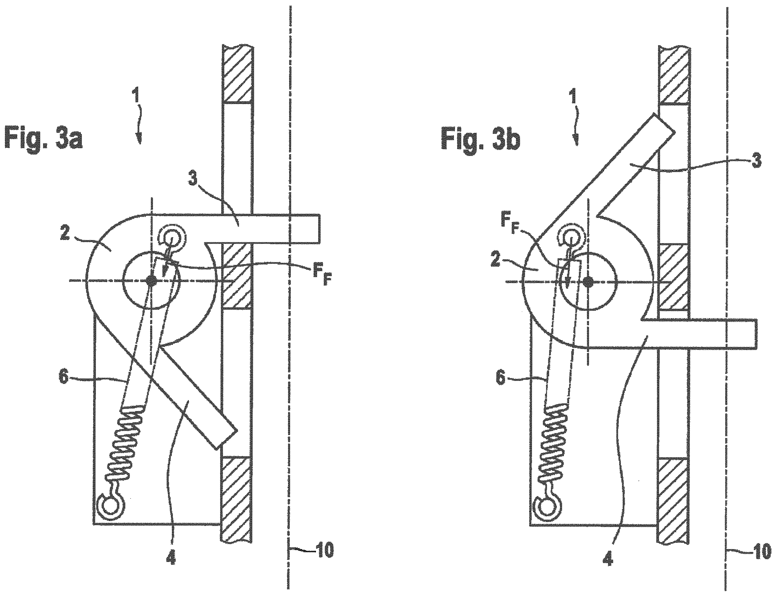

Der Tragarm 3 kann zwischen der in Figur 3a dargestellten Halteposition und der in Figur 3b gezeigten Entnahmeposition verschwenkt werden, wobei zwischen diesen beiden Positionen eine Labilgleichgewichtsposition vorgesehen ist. Die Labilgleichgewichtsposition ist in Figur 2 durch die gestrichelt dargestellte Stellung des Tragarms 3 der einen Haltevorrichtung 1 angedeutet.

Die Haltevorrichtungen 1 umfassen weiterhin jeweils ein als Zugfeder 6 ausgestaltetes Rückstellelement 7. Das eine Federende 8 der Zugfeder 6 ist am Haltehaken 2, das andere Federende 9 an den Schacht 101 seitlich begrenzenden Rahmenelementen 104 befestigt. Damit ist das andere Federende 9 stationär gegenüber der Drehachse 5 des Haltehakens 2 befestigt.

Die Anbindung des einen Federendes 8 am Haltehaken 2 ist weiterhin so gewählt, dass der Tragarm 3 des Haltehakens 2 bei einer Verschwenkung des Tragarms 3 in einem Bereich zwischen der in Figur 2 gezeigten Halteposition und der angedeuteten Labilgleichgewichtsposition in Richtung der Halteposition gedrängt wird. Bei einer Verschwenkung des Tragarms 3 in einem Bereich zwischen der in Figur 1 angedeuteten Labilgleichgewichtsposition und der in Figur 3b gezeigten Entnahmeposition wird der Tragarm 3 von dem Rückstellelement 7 in Richtung der Entnahmeposition gedrängt. Der Haltehaken 2 ist somit bistabil, d.h. er ist in zwei Positionen, der Halteposition und der Entnahmeposition, durch das Rückstellelement 7 in einer stabilen Lage gehalten.

Dieser Umstand wird anhand der Figuren 3a und 3b verdeutlicht. In Figur 3a ist eine Haltevorrichtung 1 gemäß Figur 2 dargestellt, wobei sich der Tragarm 3 des Haltehakens 2 in der Halteposition befindet. In diesem Fall wirkt die Federkraft F_{F} der Feder 6 derart, dass der Tragarm 3 in der Halteposition gehalten oder bei einer gewissen Verschwenkung in die Halteposition gedrängt wird. Die Federkraft F_{F} bewirkt ein entsprechendes Moment. Im Beispiel gemäß Figur 3a wirkt dieses Moment im Uhrzeigersinn um die Drehachse 5 des Haltehakens 2.

Ähnliches gilt für die in Figur 3b dargestellte Entnahmeposition mit einem gegenüber der Figur 3a in die entsprechende Position verschwenkten Tragarm 3. In diesem Fall wirkt die Federkraft F_{F} der Feder 6 derart, dass der Tragarm 3 in der Entnahmeposition gehalten oder bei einer gewissen Verschwenkung in die Entnahmeposition gedrängt wird. Das durch die Federkraft F_{F} hervorgerufene Moment um die Drehachse 5 des Haltehakens 2 wirkt im Beispiel gemäß Figur 3b entgegen dem Uhrzeigersinn.

Zwischen Halte- und Entnahmeposiiton ist die Labilgleichgewichtsposition vorgesehen, bei der der Tragarm 3 grundsätzlich zu keiner der beiden genannten Positionen gedrängt wird (sich also im Momenten-Gleichgewicht befindet). Jede von der Labilgleichgewichtsposition abweichende Position des Tragarms 3 führt aber unweigerlich dazu, dass der Tragarm 3 eindeutig bestimmbar entweder zur Halteposition oder zur Entnahmeposition gedrängt wird.

Für jede Haltevorrichtung 1 ist eine Auslöseebene 10 definiert. Die Auslöseebene 10 ist dabei parallel zur Höhenerstreckung des Behälterstapels 200, die durch den Doppelpfeil 202 angedeutet ist, somit im Wesentlichen eine vertikale Ebene. Die Auslöseebene 10 schneidet den Tragarm 3 in der in Figur 2 und 3a dargestellten Halteposition, während die Auslöseebene 10 vom Auslösearm 4 in dieser Position des Tragarms 3 nicht geschnitten wird. In der Entnahmeposition des Tragarms 3 wird die Auslöseebene 10 von dem Auslösearm 4 jedoch geschnitten, wie aus der Figur 3b ersichtlich ist. In der Labilgleichgewichtsposition schneiden sowohl der Tragarm 3 als auch der Auslösearm 4 die Auslöseebene 10.

Die Funktionsweise der Haltevorrichtung 1 wird nachfolgend anhand beispielhafter Einlagerungs- und Entnahmevorgänge eines Behälters 201 in bzw. aus einen Behälterstapel 200 erläutert. Zur Einlagerung eines Behälters 201 in den Behälterstapel 200 wird der einzulagernde Behälter 201 von einem Lagerbediengerät 300 mit der Behälteraufnahme 301 von unten an den ursprünglichen untersten Behälter 201 des Behälterstapels 200 herangefahren und dann so angehoben, dass der gesamte Behälterstapel 200 angehoben wird. Zu diesem Zeitpunkt wird der einzulagernde Behälter 201 bereits der neue unterste Behälter 201 des Behälterstapels 200.

Anschließend wird der gesamte Behälterstapel 200 weiter angehoben, sodass die Tragarme 3 der Haltehaken 2 der Haltevorrichtungen 1 derart nach oben verschwenken, dass sie seitlich an dem einzulagernden bzw. untersten Behälter 201 entlanggleiten. Dabei werden die Tragarme 3 lediglich in eine Position zwischen ihrer jeweiligen Halteposition und Labilgleichgewichtsposition verschwenkt, sodass die Rückstellelemente 7 die Tragarme 3 zurück zur Halteposition hin drängen.

Ist der Behälterstapel 200 ausreichend weit angehoben, können die Tragarme 3 der Haltehaken 2 der einzelnen Haltevorrichtungen 1 unter den einzulagernden bzw. untersten Behälter 201 greifen, wobei sie aufgrund der Rückstellelemente 7 in die Halteposition verschwenkt werden. Wird die Behälteraufnahme 301 des Lagerbediengeräts 300 anschließend wieder nach unten verfahren, senkt sich der Behälterstapel 200 auf die Tragarme 3 der Haltehaken 2 ab und wird dann durch die Haltevorrichtungen 1 gehalten. Nach dem damit abgeschlossenen Einlagerungsvorgang liegt der einzulagernde bzw. unterste Behälter 201 des Behälterstapels 200 auf den Tragarmen 3 der Haltehaken 2 auf und die Behälteraufnahme 301 des Lagerbediengerätes 300 kann weggefahren werden. Der Einlagerungsvorgang ist damit abgeschlossen.

Es wird nun ein Entnahmevorgang eines Behälters 201 aus einem Behälterstapel 200 beschrieben. Zur Entnahme des untersten Behälters 201 eines Behälterstapels 200 wird die Behälteraufnahme 301 des Lagerbediengeräts 300 an eben diesen Behälter 201, der auf den Tragarmen 3 der Haltehaken 2 der einzelnen Haltevorrichtungen 1 aufliegt, herangefahren. Anschließend wird der gesamte Behälterstapel 200 durch das Lagerbediengerät 300 angehoben. Dabei wird die Behälteraufnahme 301 über die Höhe, die für das Einlagern eines Behälters 201 erforderlich ist, hinaus verfahren, wobei die Behälteraufnahme 301 so ausgebildet ist, dass sie seitlich über den zu entnehmenden bzw. untersten Behälter 201 übersteht und in die Auslöseebenen 10 der einzelnen Haltervorrichtungen 1 ragt. Die seitlich überstehenden Bereiche der Behälteraufnahme 301 bilden Auslöser 303 für die Haltevorrichtungen.

Wird die Behälteraufnahme 301 ausreichend hoch verfahren, kommen die Tragarme 3 mit den Auslösern 303 in Kontakt, und werden in den Bereich zwischen Labilgleichgewichtsposition und Entnahmeposition hinein verschwenkt. Daraufhin werden die Rückstellelemente 7 die Tragarme 3 in die Entnahmeposition bewegen, womit die Auslösearme 4 der Haltehaken 2 in die Auslöseebene 10 hineinragen. In der Entnahmeposition behindern die Tragarme 3 die Entnahme des untersten Behälters 201 nach unten nicht mehr.

Beim anschließenden Absenken des Behälterstapels 200 durch die Behälteraufnahme 301 des Lagerbediengeräts 300 kommen die Auslösearme 4 mit den Auslösern 303 in Kontakt und werden derart verschwenkt, dass die mit den Auslösearmen 4 drehfest verbundenen Tragarme 3 der Haltehaken 2 in einen Bereich zwischen Labilgleichgewichtsposition und Halteposition verschwenkt werden, womit die Tragarme 3 durch die Rückstellelemente 7 wieder zur Halteposition hin gedrängt werden.

Bei weiterem Absenken der Behälteraufnahme 301 des Lagerbediengeräts 300 gleiten die Tragarme 3 dann zunächst an den Seitenwänden des zu entnehmenden Behälters 201 entlang, bevor sie zwischen dem zu entnehmenden Behälter 201 und dem darüber liegenden Behälter 201 eingreifen.

Wird die Behälteraufnahme 301 des Lagerbediengeräts 300 noch weiter abgesenkt, schwenken die Tragarme 3 in die Halteposition, wobei der vormals über dem zu entnehmenden Behälter 201 liegende Behälter direkt auf den Tragarmen 3 der Haltevorrichtungen 1 aufliegt und somit nunmehr den untersten Behälter 201 des Behälterstapels 200 bildet. Der zu entnehmende Behälter 201 liegt auf der Behälteraufnahme 301 des Lagerbediengeräts 300 auf und kann weiter transportiert werden.

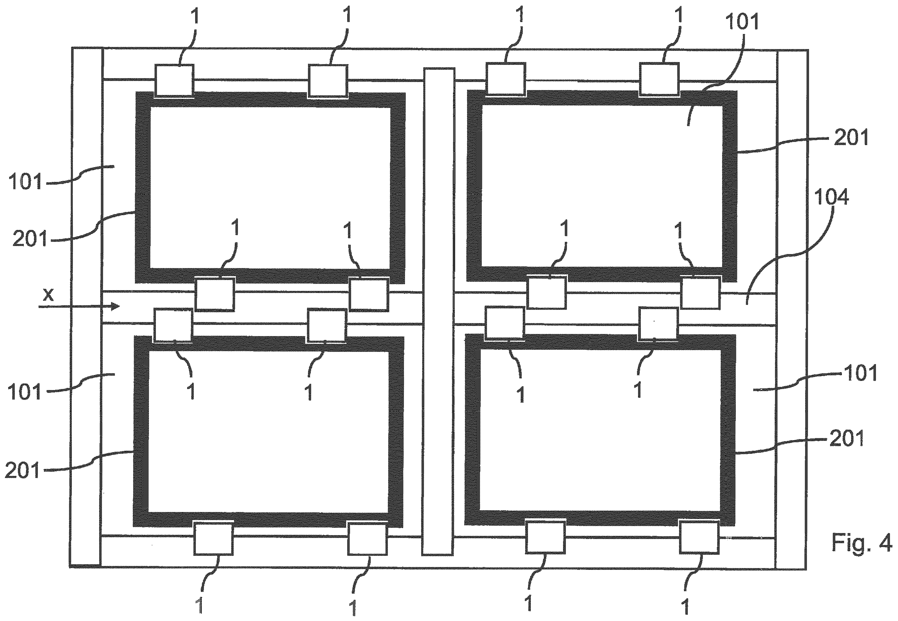

In der Figur 4 sind vier Schächte 101 des Lagersystems 100 dargestellt, die auch als Speicherzellen oder kurz "Zellen" bezeichnet werden. Erkennbar ist insbesondere die versetzte Anordnung der Haltehaken 1 benachbarter Zellen 101. Die zueinander versetzten Haltehaken sind dabei so dicht zusammengerückt, dass sie in der dargestellten x-Richtung überlappen.

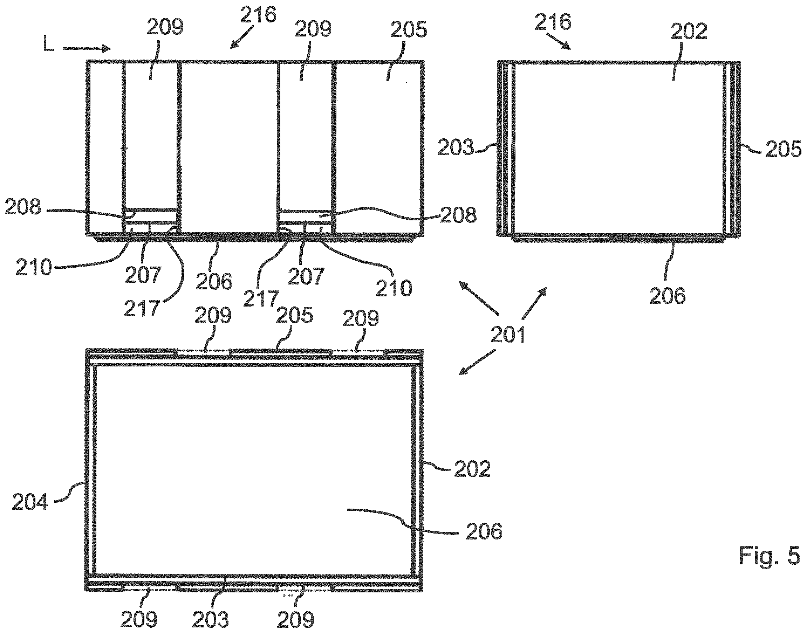

Die Figur 5 zeigt einen für eine solche Haltehaken-Anordnung geeigneten Behälter 201. Der Behälter weist einen Behälterboden 206 und an den vier Behälterseiten jeweilige Seitenwände 202, 203, 204, 205 auf. Der Behälter ist in seiner Oberseite 216 offen. An den gegenüberliegenden Seitenwänden 203, 205 ist jeweils eine vertikal verlaufende Nut 209 vorhanden, die sich bis zur Oberseite 216 des Behälters 201 erstreckt. Die Nut 209 ist im unteren Bereich, nahe des Behälterbodens 206, durch einen horizontal verlaufenden Steg 208 unterbrochen. Die Unterseite des Stegs 208 bildet jeweils eine Haltekante 207, auf der der Behälter auf dem Tragarm 3 eines Haltehakens 1 gelagert werden kann. Unterhalb der Haltekante 207 erstreckt sich die Nut 209 noch in einem Bereich 210 bis zur Behälterunterseite hin.

Wie man erkennt, sind die Haltekante 207 und dementsprechend die Nuten 209 gegenüberliegender Behälterseiten versetzt zueinander angeordnet, entsprechend der Anordnung der Haltehaken 1, wie in Figur 4 dargestellt. Jede der Haltekanten 207 erstreckt sich in Längsrichtung nur über einen Teilabschnitt einer Behälterseite und ist seitlich links und rechts von Haltekanten-Grenzflächen 217 begrenzt. Im dargestellten Beispiel fluchten die Haltekanten-Grenzflächen 217 mit den Seitenwänden der jeweiligen Nut 209, so dass sich eine Haltekante 207 über die Breite der Nut 209 erstreckt.

Bei einer Einlagerung eines Behälters läuft der Tragarm 3 eines Haltehakens 1 zunächst in dem oberen Bereich der Nut 209 entlang, bis die Oberseite des Stegs 208 erreicht ist. Durch den Steg 208 wird der Haltehaken über den Kontakt zum Tragarm 3 ausgelenkt, jedoch nicht so weit, dass er in seine Entnahmeposition umklappt. Sobald der Tragarm 3 den Steg 208 passiert hat, klappt der Haltehaken 1 in seine Halteposition. Der Behälter 201 kann nun durch die Behälteraufnahme 301 wieder abgesenkt werden und wird durch die Tragarme 3 der Haltehaken 1 gehalten, indem die Haltekanten 207 auf den Tragarmen 3 aufliegen.

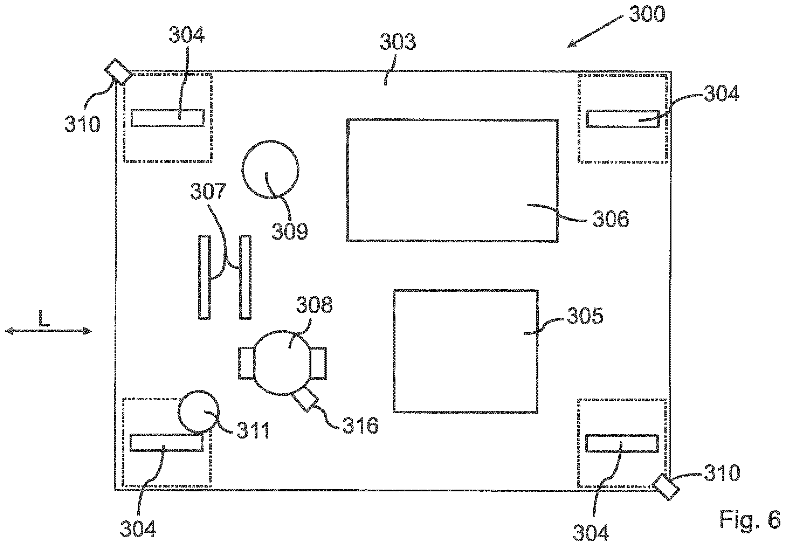

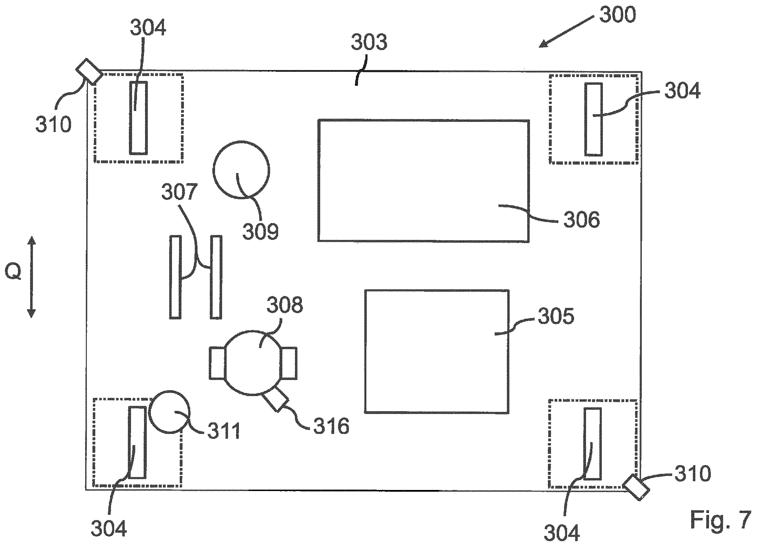

Unter Bezugnahme auf die Figuren 6 und 7 wird nun eine Ausführungsform des Lagerbediengeräts 300 erläutert. Das Lagerbediengerät 300 weist vier Räder 304 auf, die an oder in der Nähe von jeweiligen Eckbereichen eines im Wesentlichen rechteckigen Rahmens 303 des Lagerbediengeräts angeordnet sind. Die Räder 304 können über einen motorisch betriebenen Verstellmechanismus von einer Längsfahrrichtung L des Lagerbediengeräts, in der sie in Figur 6 ausgerichtet sind, um etwa 90 Grad gedreht werden, sodass sie in einer Querfahrrichtung Q des Lagerbediengeräts ausgerichtet sind. Dies zeigt die Figur 7. Das Lagerbediengerät ist in der jeweiligen Längsfahrrichtung oder Querfahrrichtung in beiden Fahrtrichtungen betreibbar, d.h. vorwärts und rückwärts. Da das Lagerbediengerät zum Betrieb auf einem Schienensystem mit im Wesentlichen rechtwinklig zueinander angeordneten Schienen eingerichtet ist, sind bei einer solchen Ausführungsform keine sonstigen Lenkbewegungen, um z.B. eine Kurve zu fahren, erforderlich. Daher ist es für einen solchen Betrieb des Lagerbediengeräts ausreichend, wenn die Räder nur in die zwei diskreten Stellungen für die Längsfahrrichtung und die Querfahrrichtung verstellt werden können.

Das Lagerbediengerät 300 weist einen oder mehrere Bodenabstandssensoren 309 auf, die z.B. am Boden des Lagerbediengeräts angebracht sein können oder zumindest in Richtung des Untergrunds, auf dem das Lagerbediengerät betrieben wird, um einen Abstand zum Boden sensieren können. Es kann insbesondere der Abstand vertikal nach unten gemessen werden.

Ferner weist das Lagerbediengerät 300 ein RFID-Lesegerät 305 auf. Mittels des RFID-Lesegeräts 305 kann das Lagerbediengerät 300 eine Kommunikation mit in der Umgebung angeordneten RFID-Transpondern durchführen. Sind die RFID-Transponder im Fahrbereich des Lagerbediengeräts derart verteilt, dass das Lagerbediengerät jeweils nur zu einem bestimmten Transponder oder einer bestimmten Gruppe von Transpondern eine Kommunikation aufnehmen kann, so kann dies für die Bestimmung der absoluten Position des Lagerbediengeräts in dessen Fahrbereich genutzt werden.

Das Lagerbediengerät 300 weist außerdem wenigstens einen Drehsensor 311 auf. Mittels des Drehsensors 311 kann die Drehbewegung eines Rades 304, dem der Drehsensor 311 zugeordnet ist, erfasst werden. Auf diese Weise kann über die vom Drehsensor erfassten Daten eine Relativposition des Lagerbediengeräts im Fahrbereich bestimmt werden.

Das Lagerbediengerät weist einen Antriebsmotor 308 auf, der zum Antrieb des Lagerbediengeräts, d.h. zum Verfahren, dient. Das Lagerbediengerät kann auch mehrere Motoren aufweisen, z.B. jeweils einen Motor für eine Radgruppe (vorn, hinten, diagonal) oder einen jeweiligen Motor pro Rad 304. Der Antriebmotor 308 kann mit einem oder mehreren Sensoren 316 versehen sein, um die Motorumdrehungen des Antriebsmotors 308 zu erfassen und auf diese Weise eine zusätzliche Information über die VerfahrBewegung des Lagerbediengeräts 303 zu gewinnen.

Die Räder des Lagerbediengeräts 304 können vollständig motorisch angetrieben sein. In einer vorteilhaften Ausführungsform sind nur einige der Räder 304 motorisch angetrieben, z.B. zwei diagonal gegenüberliegende Räder. Auf diese Weise weist das Lagerbediengerät auch nicht angetriebene Räder auf, sodass über den Drehsensor 311 auch eine schlupffreie Bewegungserfassung eines Rades 304 möglich ist.

Der Antriebsmotor 308 oder ggf. weitere Antriebsmotoren können insbesondere als Elektromotoren ausgebildet sein. Das Lagerbediengerät kann auf diese Weise elektromotorisch verfahren werden. Das Lagerbediengerät weist weitere elektrische Komponenten auf, z.B. einen elektrischen Hubmotor, um den Hubmechanismus 302 mit der Behälteraufnahme 301 auszufahren oder einzufahren. Für die elektrische Energieversorgung der elektrisch betriebenen Komponenten, insbesondere der Elektromotoren, weist das Lagerbediengerät zwei voneinander unabhängige Energiequellen auf, und zwar eine aufladbare elektrische Energiespeichereinrichtung 306 in Form eines Akkumulators und Stromabnehmer 307. Über die Stromabnehmer 307 kann dem Lagerbediengerät elektrische Energie von einer externen elektrischen Energieversorgungseinrichtung, z.B. einem Energieversorgungsnetz, zugeführt werden. Um die Energieversorgung aus den unterschiedlichen Energiequellen zu steuern, weist das Lagerbediengerät noch ein Energieversorgungsmanagement auf, das nicht separat dargestellt ist. Das Energieversorgungsmanagement kann in eine elektronische Steuerungseinrichtung des Lagerbediengeräts integriert sein.

Das Lagerbediengerät weist außerdem an diagonal gegenüberliegenden Bereichen des Rahmens 303 Lichttaster 310 zur Erfassung von im Fahrbereich des Lagerbediengeräts angeordneten Lichtmarkern auf. Die Lichttaster können als schnelle Lichttaster ausgebildet sein, insbesondere mit wenigstens 10 kHz schaltende Lichttaster.

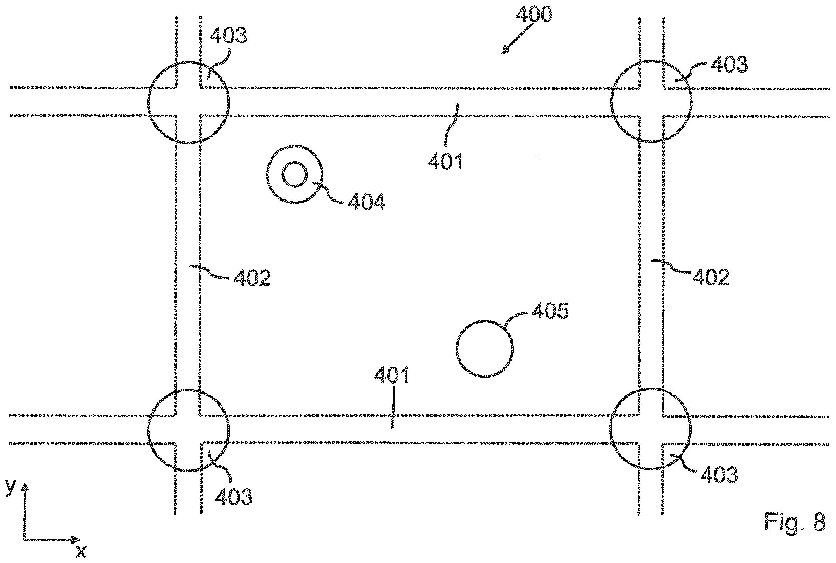

Das in der Figur 8 ausschnittsweise dargestellte Schienensystem 400 ist für den Betrieb des Lagerbediengeräts 300 vorgesehen. Es weist in einer ersten Hauptrichtung verlaufende Schienen 401 und im Wesentlichen senkrecht dazu in einer zweiten Hauptrichtung verlaufende Schienen 402 auf. Die Schienen 401 kreuzen sich mit den Schienen 402 an Kreuzungsstellen 403. Durch die vier Kreuzungsstellen 403 sowie die die Kreuzungsstellen verbindenden Stücke der Schienen 401, 402 wird ein Bereich festgelegt, der genau unter einer Speicherzelle des Hochlagers angeordnet ist, d.h. unter einem Behälterstapel 200. Das Lagerbediengerät 300 kann dabei hinsichtlich seiner Abmessungen auf die Größe einer Speicherzelle des Hochlagers ausgelegt sein, d.h. gleich groß oder etwas kleiner als eine Speicherzelle sein. Dann können benachbarte Speicherzellen gleichzeitig unabhängig voneinander von verschiedenen Lagerbediengeräten bedient werden.

Um eine absolute Positionierung des Lagerbediengeräts in einer Speicherzelle zu ermöglichen, sind verschiedene Positioniermarken 404, 405 dort angeordnet. Eine Positioniermarke 405 kann z.B. als RFID-Transponder ausgebildet sein. Der RFID-Transponder 405 wirkt zusammen mit dem RFID-Lesegerät 305 des Lagerbediengeräts. Mittels des RFID-Transponders einer Speicherzelle kann das Lagerbediengerät 300 feststellen, unter welcher Speicherzelle es sich befindet, und damit seine Absolutposition zumindest näherungsweise ermitteln. Zudem können im RFID-Transponder auch speicherzellen-spezifische Daten hinterlegt werden, so dass das Lagerbediengerät über sein RFID-Lesegerät solche speicherzellen-spezifischen Daten einlesen kann, wie z.B. die Information, dass die Speicherzelle derzeit nicht beladen werden darf.

Eine weitere Positioniermarke 404 kann als Positioniermasse oder Höhenprofil, z.B. in Kegelform, ausgebildet sein. Die Positioniermarke 404 wirkt zusammen mit dem Bodenabstandssensor 309 des Lagerbediengeräts für die absolute Positionierung. Zusätzlich können für die absolute Positionierung des Lagerbediengeräts die Lichttaster 310 genutzt werden, mit denen aufgrund der hohen Abtastrate eine schnellere Positionsbestimmung durchführbar ist.

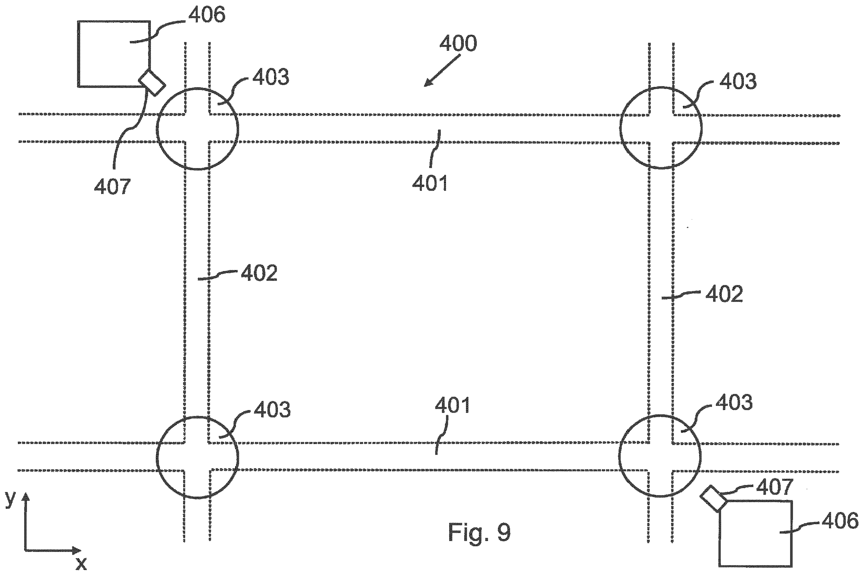

Die Figur 9 zeigt die Anordnung von entsprechenden Markern 407, die über die Lichttaster 310 detektiert werden können. Die Marker 407 können z.B. an Pfeilern 406 des Schienensystems oder des Hochlagers angeordnet sein. Mittels der Lichttaster 310 in Verbindung mit den Markern 407 kann sich das Lagerbediengerät noch während der Fahrbewegung positionieren bzw. sich genau auf die Marker 407 ausrichten. Dies erlaubt eine hohe Verfahrgeschwindigkeit des Lagerbediengeräts. Die Marker 407 können z.B. als Bleche oder sonstige reflektierende Elemente ausgebildet sei. Die Lichttaster 310 können z.B. als Druckmarkensensoren oder als Kontrastsensoren ausgebildet sein.

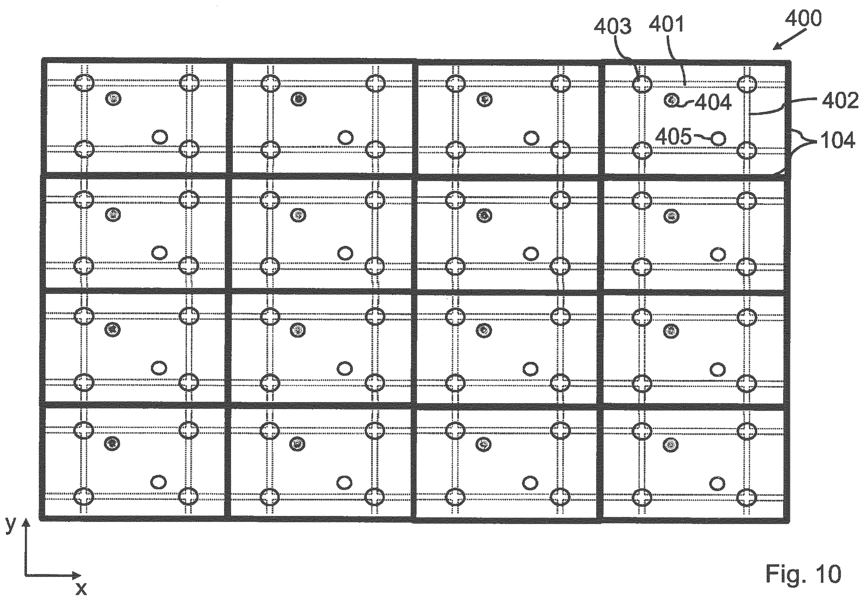

Die Figur 10 zeigt ein Schienensystem mit einer matrixartigen Anordnung von 4x4 Speicherzellen des Hochlagers. Wie erkennbar ist, ist jede Speicherzelle mit den Positioniermarken 404, 405 bestückt.

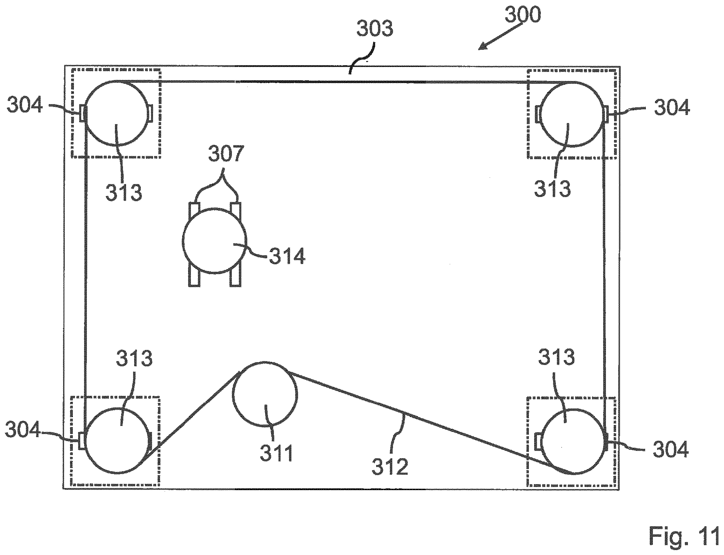

Die Figur 11 zeigt eine weitere Ausführungsform des Lagerbediengeräts 300, die auch mit der bereits zuvor erläuterten Ausführungsform kombiniert werden kann. Zur Verstellung der Räder 304 in die Längsfahrrichtung oder die Querfahrrichtung ist ein Verstellmotor 311 am Lagerbediengerät 300 vorhanden, der über einen Riemenantrieb 312 mit sämtlichen Rädern 304 verbunden ist. Die Räder 304 weisen hierfür Riemenscheiben 313 auf, um die der Riemenantrieb 312 herumgelegt ist. Durch Ansteuern des Verstellmotors 311 können alle Räder 304 wahlweise in die Längsfahrrichtung oder die Querfahrrichtung gestellt werden.

Ferner ist eine Verstelleinrichtung 314 zur Verstellung der Stromabnehmer 307 am Lagerbediengerät 300 vorhanden. Über die Verstelleinrichtung 314 können die Stromabnehmer von dem Lagerbediengerät nach unten hin ausgefahren oder eingefahren werden. Im ausgefahrenen Zustand können die Stromabnehmer 307 elektrische Energie von im Schienensystem angeordneten Stromversorgungsschienen aufnehmen und dem Lagerbediengerät als elektrische Energieversorgung zuführen. Die Verstelleinrichtung 314 kann z.B. als elektrisch angetriebener Zylinder oder sonstiger Linearaktuator ausgebildet sein.

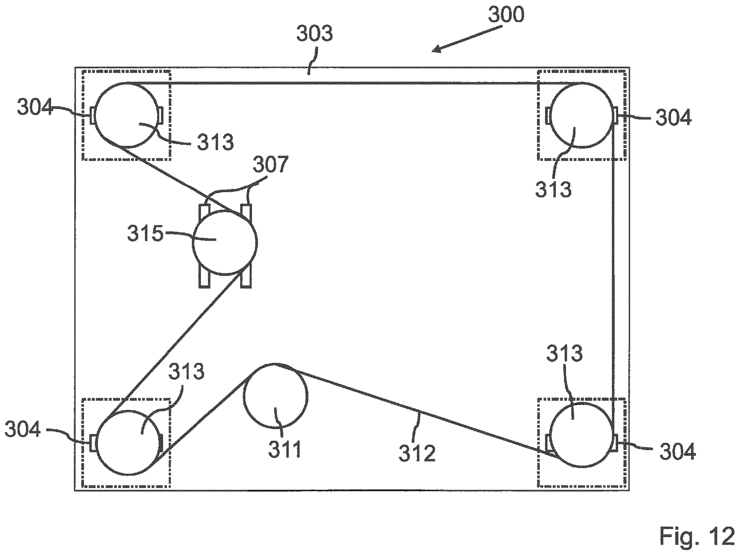

Die Figur 12 zeigt eine Alternative zum Verstellen der Stromabnehmer 307. In diesem Fall ist auch im Bereich der Stromabnehmer 307 eine Riemenscheibe 315 vorhanden, um die der Riemenantrieb 312 ebenfalls herumgelegt ist. Über die Riemenscheibe 315 können die Stromabnehmer wahlweise nach unten oder nach oben gestellt werden, wobei die Verstellung in diesem Fall mechanisch direkt abhängig ist von der Verstellung der Räder 304.

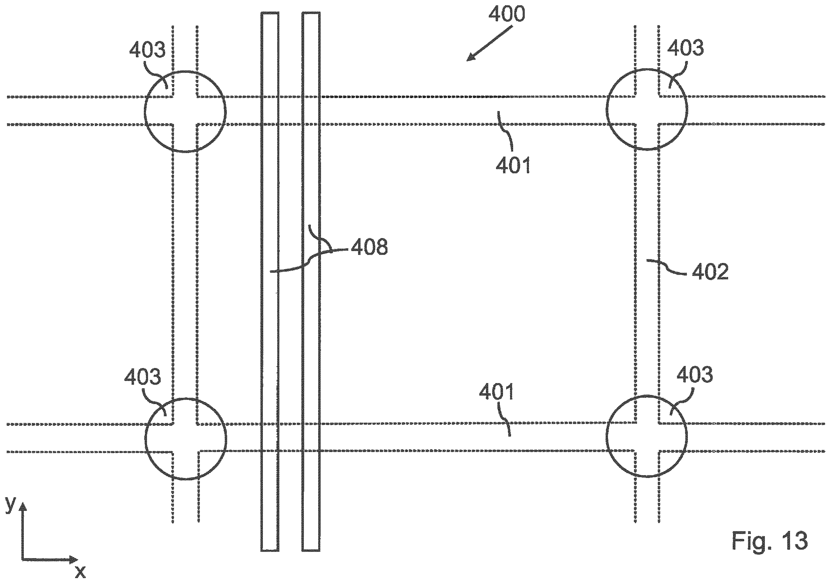

Die Figur 13 zeigt einen vergleichbaren Ausschnitt aus dem Schienensystem 400 wie die Figuren 8 und 9, wobei bei der Figur 13 die Anordnung von Stromversorgungsschienen 408 dargestellt ist. Wie erkennbar ist, verlaufen die Stromversorgungsschienen 408 parallel zu den Schienen 402 der zweiten Hauptrichtung. Dementsprechend kann das Lagerbediengerät 300 nur beim Verfahren in der zweiten Hauptrichtung, d.h. der Querfahrrichtung, über die Stromversorgungsschienen 408 durchgehend mit elektrischer Energie versorgt werden. Daher wird über die Verstelleinrichtung 314 ein Herunterfahren der Stromabnehmer 307 bewirkt, wenn das Lagerbediengerät in der Querfahrrichtung verfahren wird, somit entlang der Stromversorgungsschienen 408. Wird das Lagerbediengerät in Längsfahrrichtung verfahren, werden die Stromabnehmer 307 angehoben, und die elektrische Energieversorgung erfolgt aus der aufladbaren elektrischen Energiespeichereinrichtung 306.

Die Kreuzungsstellen zwischen den Stromversorgungsschienen 408 und den Schienen 401 der ersten Hauptrichtung können beispielsweise derart ausgebildet sein, dass die Oberseite der Stromversorgungsschienen auf gleicher Höhe ist wie die Fahrfläche der Schienen 401 der ersten Hauptrichtung. An den Kreuzungsstellen können die Schienen 401 der ersten Hauptrichtung Unterbrechungen aufweisen, durch die die Stromversorgungsschienen 408 hindurchgeführt sind. Auf diese Weise kann das Lagerbediengerät 300 mit seinen Rädern 304 im Wesentlichen hindernisfrei über die Kreuzungsstellen zwischen den Stromversorgungsschienen 408 und den Schienen 401 der ersten Hauptrichtung fahren. An diesen Kreuzungsstellen sind die Räder temporär nicht oder weniger präzise geführt als in anderen Bereichen der Schienen 401 der ersten Hauptrichtung. Um die Führung an den Kreuzungsstellen zu verbessern, ist es auch möglich, die Stromversorgungsschienen mit entsprechenden Anformungen zu versehen, die die Profilform der Schienen der zweiten Hauptrichtung nachbilden. Die Stromversorgungsschienen können z.B. als massive Metallschienen ausgebildet sein, z.B. mit einem Vierkantprofil, z.B. als Kupferschienen.

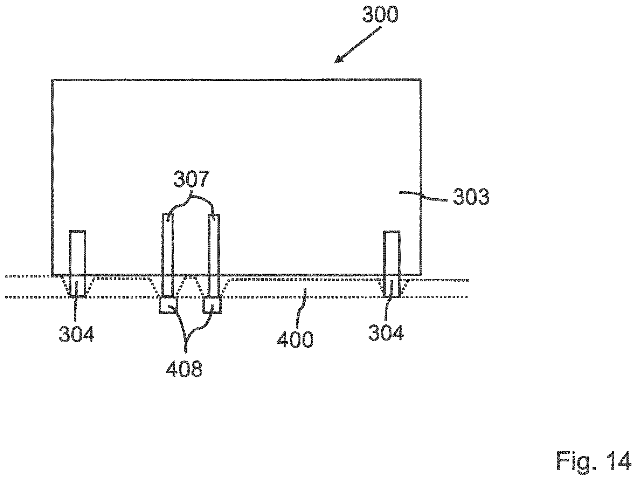

Die Figur 14 zeigt in schematischer Weise das Lagerbediengerät 300 auf dem Schienensystem 400. Erkennbar ist ferner die Verbindung der nach unten ausgefahrenen Stromabnehmer 307 zu den Stromversorgungsschienen 408.

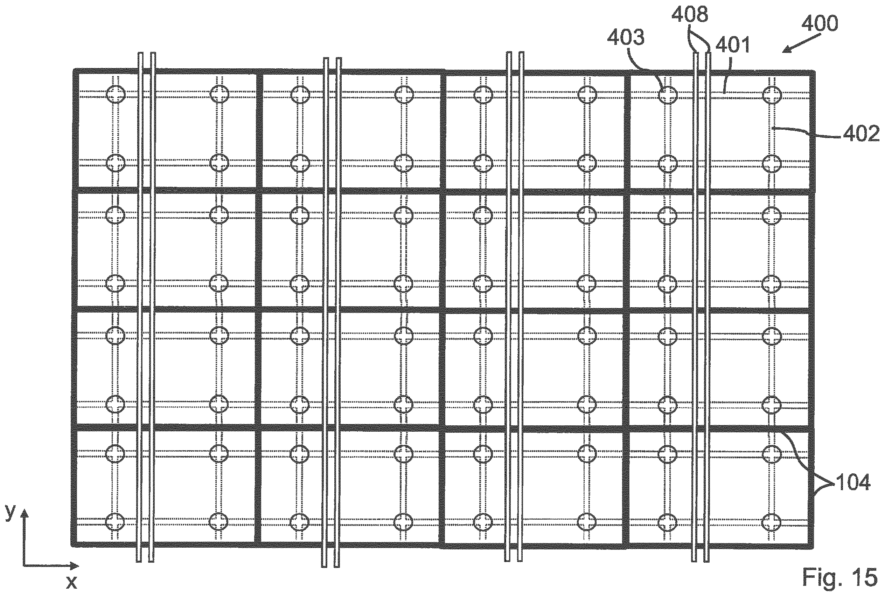

Die Figur 15 zeigt das Schienensystem 400 in vergleichbarer Darstellung wie die Figur 10. In der Figur 15 ist die Anordnung der Stromversorgungsschienen 408 in Form von vier parallelen, nebeneinander in verschiedenen Reihen der Speicherzellen verlaufenden Stromversorgungsschienen dargestellt.

## Patentansprüche

1. Fahrbares Lagerbediengerät (300) zum Einlagern und Auslagern von Ware in einem Hochlager (100), wobei das Lagerbediengerät (300) eine oder mehrere elektrisch betriebene Komponenten (308, 314) aufweist, die über eine Stromversorgungseinrichtung des Lagerbediengeräts mit elektrischer Energie versorgt sind, wobei die Stromversorgungseinrichtung wenigstens zwei verschiedene, voneinander unabhängige elektrische Energiequellen in Form wenigstens einer ersten Energiequelle und einer zweiten Energiequelle aufweist, wobei die erste Energiequelle eine mit dem Lagerbediengerät (300) mitgeführte, aufladbare elektrische Energiespeichereinrichtung (306) ist und die zweite Energiequelle eine Verbindungseinrichtung (307) zur zumindest zeitweisen Verbindung des Lagerbediengeräts (300) mit einer externen elektrischen Energieversorgungseinrichtung (408) ist, um dem Lagerbediengerät elektrische Energie von der externen elektrischen Energieversorgungseinrichtung (408) zuzuführen, **dadurch gekennzeichnet, dass** das Lagerbediengerät (300) ein Energieversorgungsmanagement aufweist, das dazu eingerichtet ist, elektrisch betriebene Komponenten (308, 314) des Lagerbediengeräts abhängig von wenigstens einem Betriebszustand des Lagerbediengeräts (300) vollständig oder überwiegend entweder aus der ersten Energiequelle oder aus der zweiten Energiequelle mit elektrischer Energie zu versorgen, wobei der wenigstens eine Betriebszustand des Lagerbediengeräts (300) wenigstens eine Fahrtrichtung beim Fahren des Lagerbediengeräts (300) ist oder umfasst.

2. Lagerbediengerät nach dem vorhergehenden Anspruch, **dadurch gekennzeichnet, dass** das Energieversorgungsmanagement dazu eingerichtet ist, die elektrischen Komponenten (308, 314) zu mehr als 50 % der Betriebszeit des Lagerbediengeräts (300) aus der zweiten Energiequelle mit elektrischer Energie zu versorgen.

3. Lagerbediengerät nach einem der vorhergehenden Ansprüche, **dadurch gekennzeichnet, dass** das Lagerbediengerät (300) als schienengebundenes Lagerbediengerät ausgebildet ist, das zum Fahren auf einem Schienensystem (400) eingerichtet ist, welches im Wesentlichen parallele Schienen (401) in einer ersten Hauptrichtung (x) und im Wesentlichen parallele Schienen (402) in einer zweiten Hauptrichtung (y) aufweist, wobei die zweite Hauptrichtung (y) im Wesentlichen senkrecht zur ersten Hauptrichtung (x) verläuft, und das Schienensystem (400) eine Vielzahl von Kreuzungen (403) zwischen den Schienen (401) der ersten Hauptrichtung (x) und den Schienen (402) der zweiten Hauptrichtung (y) aufweist.

4. Lagerbediengerät nach dem vorhergehenden Anspruch, **dadurch gekennzeichnet, dass** das Lagerbediengerät (300) beim Fahren auf den Schienen (401) der ersten Hauptrichtung (x) über seine Verbindungseinrichtung (307) nicht mit der externen elektrischen Energieversorgungseinrichtung (408) gekoppelt ist und beim Fahren auf den Schienen (402) der zweiten Hauptrichtung (y) mit der externen elektrischen Energieversorgungseinrichtung (408) gekoppelt ist.

5. Lagerbediengerät nach einem der vorhergehenden Ansprüche, **dadurch gekennzeichnet, dass** die Verbindungseinrichtung (307) des Lagerbediengeräts (300) ausfahrbare Stromabnehmer aufweist, die mit im Fahrbereich des Lagerbediengeräts (300) verlegten Stromversorgungschienen (408) koppelbar sind.

6. Lagerbediengerät nach einem der vorhergehenden Ansprüche, **dadurch gekennzeichnet, dass** das Lagerbediengerät (300) eine vertikal bewegliche Hubplattform (301) zum Einlagern und Auslagern von Ware aufweist, wobei die Hubplattform (301) über einen Elektroantrieb angetrieben ist, und wobei der Elektroantrieb der Hubplattform (301) zumindest bei einer Anhebebewegung ausschließlich oder überwiegend aus der zweiten Energiequelle mit elektrischer Energie versorgt ist.

7. Lagerbediengerät nach dem vorhergehenden Anspruch, **dadurch gekennzeichnet, dass** die Hubplattform (301) zumindest bei einer Anhebebewegung nur bei Vorhandensein einer Kopplung der Verbindungseinrichtung (307) des Lagerbediengeräts (300) zur externen elektrischen Energieversorgungseinrichtung (408) in Betrieb ist.

8. Lagerbediensystem, aufweisend wenigstens ein Lagerbediengerät (300) nach einem der vorhergehenden Ansprüche und ein Schienensystem (400), auf dem das wenigstens eine Lagerbediengerät (300) verfahrbar ist.

9. Lagerbediensystem nach dem vorhergehenden Anspruch, **dadurch gekennzeichnet, dass** das Schienensystem (400) im Wesentlichen parallele Schienen (401) in einer ersten Hauptrichtung (x) und im Wesentlichen parallele Schienen (402) in einer zweiten Hauptrichtung (y) aufweist, wobei die zweite Hauptrichtung (y) im Wesentlichen senkrecht zur ersten Hauptrichtung (x) verläuft, und das Schienensystem (400) eine Vielzahl von Kreuzungen (403) zwischen den Schienen (401) der ersten Hauptrichtung (x) und den Schienen (402) der zweiten Hauptrichtung (y) aufweist.

10. Lagerbediensystem nach dem vorhergehenden Anspruch, **dadurch gekennzeichnet, dass** auf dem Schienensystem (400) mehrere Lagerbediengeräte (300) gleichzeitig betreibbar sind, wobei jedes Lagerbediengerät (300) jede Speicherzelle (200) des Hochlagers (100) anfahren kann.

11. Lagerbediensystem nach einem der Ansprüche 8 bis 10, **dadurch gekennzeichnet, dass** das Schienensystem (400) im Fahrbereich des Lagerbediengeräts (300) verlegte Stromversorgungschienen (408) aufweist, mit denen die Verbindungseinrichtung (307) des Lagerbediengeräts (300) koppelbar ist.

12. Lagerbediensystem nach dem vorhergehenden Anspruch, **dadurch gekennzeichnet, dass** die Stromversorgungschienen (408) oder zumindest ein Teil davon parallel zu den Schienen (402) der zweiten Hauptrichtung (y) angeordnet sind.

## Claims

1. Mobile warehousing apparatus (300) for storing and retrieving goods in a high-bay warehouse (100), wherein the warehousing apparatus (300) has one or more electrically operated components (308, 314) to which electrical energy is supplied by a power supply device of the warehousing apparatus, wherein the power supply device has at least two different electrical energy sources, independent of one another, in the form of at least a first energy source and a second energy source, wherein the first energy source is a chargeable electrical energy storage device (306), carried along with the warehousing apparatus (300), and the second energy source is a connecting device (307) for connecting the warehousing apparatus (300), at least for a time, to an external electrical energy supply device (408), in order to feed electrical energy to the warehousing apparatus from the external electrical energy supply device (408), **characterized in that** the warehousing apparatus (300) has an energy supply management, which is designed to supply electrically operated components (308, 314) of the warehousing apparatus with electrical energy completely or predominantly from either the first energy source or the second energy source, dependent on at least one operating state of the warehousing apparatus (300), wherein the at least one operating state of the warehousing apparatus (300) is or comprises at least a direction of movement of the warehousing apparatus (300) when it is moving along.

2. Warehousing apparatus according to the preceding claim, **characterized in that** the energy supply management is designed to supply the electrical components (308, 314) with electrical energy from the second energy source for over 50% of the operating time of the warehousing apparatus (300).

3. Warehousing apparatus according to one of the preceding claims, **characterized in that** the warehousing apparatus (300) is formed as a rail-bound warehousing apparatus, which is designed for moving along on a rail system (400), which has substantially parallel rails (401) in a first main direction (x) and substantially parallel rails (402) in a second main direction (y), wherein the second main direction (y) runs perpendicularly to the first main direction (x), and the rail system (400) has a multiplicity of crossings (403) between the rails (401) of the first main direction (x) and the rails (402) of the second main direction (y).

4. Warehousing apparatus according to the preceding claim, **characterized in that** the warehousing apparatus (300) is not coupled to the external electrical energy supply device (408) by way of its connecting device (307) while it is moving along on the rails (401) of the first main direction (x) and is coupled to the external electrical energy supply device (408) while it is moving along on the rails (402) of the second main direction (y).

5. Warehousing apparatus according to one of the preceding claims, **characterized in that** the connecting device (307) of the warehousing apparatus (300) has extendable current collectors, which can be coupled to power supply rails (408) laid in the area in which the warehousing apparatus (300) moves along.

6. Warehousing apparatus according to one of the preceding claims, **characterized in that** the warehousing apparatus (300) has a vertically movable lifting platform (301) for the storing and retrieving of goods, wherein the lifting platform (301) is driven by an electric drive, and wherein, at least during a lifting movement, the electric drive of the lifting platform (301) is supplied with electrical energy exclusively or predominantly from the second energy source.

7. Warehousing apparatus according to the preceding claim, **characterized in that**, at least during a lifting movement, the lifting platform (301) is only in operation when there is a coupling of the connecting device (307) of the warehousing apparatus (300) to the external electrical energy supply device (408) .

8. Warehousing system, having at least one warehousing apparatus (300) according to one of the preceding claims and a rail system (400) on which the at least one warehousing apparatus (300) can move along.

9. Warehousing system according to the preceding claim, **characterized in that** the rail system (400) has substantially parallel rails (401) in a first main direction (x) and substantially parallel rails (402) in a second main direction (y), wherein the second main direction (y) runs substantially perpendicularly to the first main direction (x), and the rail system (400) has a multiplicity of crossings (403) between the rails (401) of the first main direction (x) and the rails (402) of the second main direction (y).

10. Warehousing system according to the preceding claim, **characterized in that** a number of warehousing apparatuses (300) can be operated on the rail system (400) at the same time, wherein each warehousing apparatus (300) can move to each storage cell (200) of the high-bay warehouse (100).

11. Warehousing system according to one of Claims 8 to 10, **characterized in that** the rail system (400) has power supply rails (408) which are laid in the area in which the warehousing apparatus (300) moves along and to which the connecting device (307) of the warehousing apparatus (300) can be coupled.

12. Warehousing system according to the preceding claim, **characterized in that** the power supply rails (408), or at least some of them, are arranged parallel to the rails (402) of the second main direction (y).

## Revendications

1. Appareil de desserte d'entrepôt mobile (300) permettant de stocker et de déstocker des marchandises dans un entrepôt de grande hauteur (100), l'appareil de desserte d'entrepôt (300) présentant un ou plusieurs composants (308, 314) à fonctionnement électrique qui sont alimentés en énergie électrique par un dispositif d'alimentation en courant de l'appareil de desserte d'entrepôt, dans lequel le dispositif d'alimentation en courant présente au moins deux sources d'énergie électrique différentes, indépendantes l'une de l'autre, sous la forme au moins d'une première source d'énergie et d'une deuxième source d'énergie, la première source d'énergie étant un dispositif d'accumulation d'énergie électrique rechargeable (306) embarqué sur l'appareil de desserte d'entrepôt (300) et la deuxième source d'énergie étant un dispositif de raccordement (307) pour un raccordement au moins temporaire de l'appareil de desserte d'entrepôt (300) à un dispositif d'alimentation en énergie électrique externe (408) pour amener de l'énergie électrique à l'appareil de desserte d'entrepôt à partir du dispositif d'alimentation en énergie électrique externe (408),
**caractérisé en ce que** l'appareil de desserte d'entrepôt (300) présente un dispositif de gestion d'alimentation en énergie qui est aménagé pour alimenter en énergie électrique des composants (308, 314) à fonctionnement électrique de l'appareil de desserte d'entrepôt en fonction d'au moins un état de fonctionnement de l'appareil de desserte d'entrepôt (300) entièrement ou principalement soit à partir de la première source d'énergie, soit à partir de la deuxième source d'énergie, l'au moins un état de fonctionnement de l'appareil de desserte d'entrepôt (300) étant ou comprenant au moins un sens de la marche lors du déplacement de l'appareil de desserte d'entrepôt (300).

2. Appareil de desserte d'entrepôt selon la revendication précédente, **caractérisé en ce que** le dispositif de gestion d'alimentation en énergie est aménagé pour alimenter en énergie électrique les composants électriques (308, 314) pendant plus de 50 % du temps de fonctionnement de l'appareil de desserte d'entrepôt (300) à partir de la deuxième source d'énergie.

3. Appareil de desserte d'entrepôt selon l'une quelconque des revendications précédentes, **caractérisé en ce que** l'appareil de desserte d'entrepôt (300) est réalisé sous la forme d'un appareil de desserte d'entrepôt sur rails qui est aménagé pour rouler sur un système de rails (400) qui présente des rails (401) essentiellement parallèles dans une première direction principale (x) et des rails (402) essentiellement parallèles dans une deuxième direction principale (y), la deuxième direction principale (y) s'étendant de manière substantiellement perpendiculaire à la première direction principale (x), et le système de rails (400) présentant une pluralité de croisements (403) entre les rails (401) de la première direction principale (x) et les rails (402) de la deuxième direction principale (y).

4. Appareil de desserte d'entrepôt selon la revendication précédente, **caractérisé en ce que** l'appareil de desserte d'entrepôt (300), lorsqu'il roule sur les rails (401) de la première direction principale (x), n'est pas couplé par son dispositif de raccordement (307) au dispositif d'alimentation en énergie électrique externe (408), et lorsqu'il roule sur les rails (402) de la deuxième direction principale (y), il est couplé au dispositif d'alimentation en énergie électrique externe (408) .

5. Appareil de desserte d'entrepôt selon l'une quelconque des revendications précédentes, **caractérisé en ce que** le dispositif de raccordement (307) de l'appareil de desserte d'entrepôt (300) présente des prises de courant extensibles qui peuvent être couplées à des rails d'alimentation en courant (408) posés dans la zone de déplacement de l'appareil de desserte d'entrepôt (300).

6. Appareil de desserte d'entrepôt selon l'une quelconque des revendications précédentes, **caractérisé en ce que** l'appareil de desserte d'entrepôt mobile (300) présente une plate-forme de levage (301) verticalement mobile pour stocker et déstocker des marchandises, la plate-forme de levage (301) étant entraînée par un entraînement électrique, et dans lequel l'entraînement électrique de la plate-forme de levage (301) est alimenté en énergie électrique au moins lors d'un mouvement de montée exclusivement ou principalement à partir de la deuxième source d'énergie.

7. Appareil de desserte d'entrepôt selon la revendication précédente, **caractérisé en ce que** la plate-forme de levage (301) est en service au moins lors d'un mouvement de montée uniquement en présence d'un couplage du dispositif de raccordement (307) de l'appareil de desserte d'entrepôt (300) avec le dispositif d'alimentation en énergie électrique externe (408).

8. Système de desserte d'entrepôt, présentant au moins un appareil de desserte d'entrepôt (300) selon l'une quelconque des revendications précédentes et un système de rails (400) sur lequel ledit au moins un appareil de desserte d'entrepôt (300) peut se déplacer.

9. Système de desserte d'entrepôt selon la revendication précédente, **caractérisé en ce que** le système de rails (400) présente des rails (401) substantiellement parallèles dans une première direction principale (x) et des rails (402) substantiellement parallèles dans une deuxième direction principale (y), la deuxième direction principale (y) s'étendant de manière substantiellement perpendiculaire à la première direction principale (x), et le système de rails (400) présentant une pluralité de croisements (403) entre les rails (401) de la première direction principale (x) et les rails (402) de la deuxième direction principale (y).

10. Système de desserte d'entrepôt selon la revendication précédente, **caractérisé en ce que** sur le système de rails (400), plusieurs appareils de desserte d'entrepôt (300) peuvent fonctionner en même temps, chaque appareil de desserte d'entrepôt (300) pouvant s'approcher de chaque cellule de stockage (200) de l'entrepôt de grande hauteur (100).

11. Système de desserte d'entrepôt selon l'une quelconque des revendications 8 à 10, **caractérisé en ce que** le système de rails (400) présente des rails d'alimentation en courant (408), posés dans la zone de déplacement de l'appareil de desserte d'entrepôt (300), avec lesquels le dispositif de raccordement (307) de l'appareil de desserte d'entrepôt (300) peut être couplé.

12. Système de desserte d'entrepôt selon la revendication précédente, **caractérisé en ce que** les rails d'alimentation en courant (408), ou du moins une partie de ceux-ci, sont disposés parallèlement aux rails (402) de la deuxième direction principale (y).
